# EUROPÄISCHE PATENTSCHRIFT

(11) **EP 2 783 238 B1**
(45) Veröffentlichungstag und Bekanntmachung des Hinweises auf die Patenterteilung: **03.02.2016**
(21) Anmeldenummer: 12805611.6
(22) Anmeldetag: 20.11.2012
(51) Int. Cl.: G01S 13/93, G01S 7/40, F16B 5/02

(54) **JUSTIERBARE HALTERUNGSVORRICHTUNG FÜR SENSOREN**
ADJUSTABLE HOLDING DEVICE FOR SENSORS
DISPOSITIF SUPPORT AJUSTABLE POUR CAPTEURS

(30) Priorität: 24.11.2011 DE 102011119392
(43) Veröffentlichungstag der Anmeldung: 01.10.2014
(73) Patentinhaber: KNORR-BREMSE Systeme für Nutzfahrzeuge GmbH, 80809 München (DE)
(72) Erfinder: GOLD, Matthias, 71706 Markgröningen (DE); ROSSI, Mark, 71691 Freiberg a. N. (DE)
(86) Internationale Anmeldenummer: PCT/EP2012/073119
(87) Internationale Veröffentlichungsnummer: WO 2013/076084

(56) Entgegenhaltungen:
- EP-A2- 2 233 364
- DE-A1- 10 354 985
- US-A1- 2002 085 385
- US-A1- 2003 117 810

## Beschreibung

Die Erfindung betrifft eine justierbare Halterungsvorrichtung für Sensoren, beinhaltend einen Grundkörper, an und gegenüber welchem ein den wenigstens einen Sensor lagernder Lagerkörper mittels wenigstens eines sphärischen Gelenks justierbar gehalten ist, g emäß dem Oberbegriff von Anspruch 1. Mit Hilfe einer solchen justierbare Halterungsvorrichtung soll eine genaue Position eines oder mehrerer Sensoren relativ zum Grundkörper um mehrere Freiheitsgrade eingestellt werden können.

Eine justierbare Halterungsvorrichtung für Kraftfahrzeugscheinwerfer ist beispielsweise aus der DE-A-29 16 225 bekannt. Dort wird ein Kraftfahrzeugscheinwerfer an einem Rahmen gehalten, welcher unter anderem mittels eines Kugelgelenks an einer Grundplatte gelagert ist. Das Kugelgelenk beinhaltet einen Gewindestift mit einer endseitigen Kugelpfanne, in welcher eine mit dem Rahmen verbundene Kugel aufgenommen ist. Die Kugel ist dabei in die Kugelpfanne unter deren elastischer Verformung eingedrückt. Der Gewindestift ist in den Grundkörper eingeschraubt, so dass der den Scheinwerfer tragende Rahmen um das Kugelgelenk schwenkbar ist. Zur Einstellung einer bestimmten Schwenkstellung des den Scheinwerfer tragenden Rahmens gegenüber einer vertikalen und einer horizontalen Schwenkachse, welche das Kugelgelenk schneiden, sind zwei Einstellschrauben vorgesehen. Somit ist der Rahmen über das Kugelgelenk und die beiden Stellschrauben und somit durch drei Aufnahmen gegenüber dem Grundkörper gehalten. Dabei wird die eingestellte Position des Scheinwerfers lediglich durch die Reibung der Stellschrauben in den zugeordneten Innengewinden am Grundkörper gesichert. Weiterhin bedingt die Verformung der elastischen Gelenkpfanne eine gewisse Nachgiebigkeit des Kugelgelenks, was einer genauen Einstellung bzw. einem langfristigen Erhalt der Sensorposition abträglich ist.

Der Erfindung liegt demgegenüber die Aufgabe zugrunde, eine justierbare Halterungsvorrichtung für Sensoren zur Verfügung zu stellen, bei welcher die Position des Sensors möglichst genau einstellbar ist und die einmal eingestellte Position über lange Zeit stabil aufrecht erhalten werden kann.

Diese Aufgabe wird erfindungsgemäß durch die Merkmale von Anspruch 1 gelöst.

### Offenbarung der Erfindung

Der Erfindung liegt der Gedanke zugrunde, dass das sphärische Gelenk einen am Grundkörper befestigten und durch eine Durchgangsöffnung des Lagerkörpers ragenden Gewindestift beinhaltet, mit welchem eine Öffnung eines Körpers mit einer sphärischen Außenfläche verschraubt ist, welche in komplementär sphärischen Innenflächen zweier zusammen gesetzter Halbschalen einerseits schwenkbar und andererseits zusammen mit den Halbschalen um eine mit dem Gewindestift koaxiale Drehachse mitdrehbar gehalten ist, um welche die Halbschalen in der Durchgangsöffnung des Lagerkörpers drehbar aufgenommen sind, derart, dass durch eine fremdkraftbedingte Drehung der wenigstens drehgekoppelten Halbschalen gegenüber der Durchgangsöffnung der Körper mit der sphärischen Außenfläche relativ zum Gewindestift unter Verlagerung der Halbschalen und des Lagerkörpers in Richtung des Gewindestifts verschraubbar ist.

Der Körper mit einer sphärischen Außenfläche kann eine Vollkugel, eine Teilkugel oder eine Kugelschicht umfassen. Wesentlich ist, dass die sphärischen Außenfläche in der zwischen den beiden Halbschalen gebildeten, komplementär sphärischen Innenfläche gehalten ist, um zunächst beliebige Drehungen der Innenfläche gegenüber der Außenfläche zu ermöglichen.

Bedingt durch die durch die beiden zusammen gesetzten, eine Pfanne für die sphärischen Außenfläche bildenden Halbschalen können elastische Verformungen der Pfanne bei der Herstellung des sphärischen Gelenks vermieden werden. Dadurch kann die Steifigkeit des sphärischen Gelenks höher ausfallen, was sich günstig auf die Einstellgenauigkeit des Sensors auswirkt. Andererseits kann der Durchmesser der sphärischen Außenfläche gegenüber dem Stand der Technik relativ groß ausfallen, wodurch die Lager- bzw. Führungsfläche des sphärischen Gelenks auch entsprechend groß ist, was sich ebenfalls positiv auf die Kraftübertragung, die Steifigkeit des sphärischen Gelenks und damit auf die Einstellgenauigkeit auswirkt.

Durch die in den Unteransprüchen aufgeführten Maßnahmen sind vorteilhafte Weiterbildungen und Verbesserungen der in Anspruch 1 angegebenen Erfindung möglich.

Bevorzugt ist eine Teilungsebene der beiden Halbschalen in der Durchgangsöffnung angeordnet. Dies kann beispielsweise dadurch realisiert sein, dass die Halbschalen am Umfang mit Umfangsabstand verteilt angeordnete und in der Durchgangsöffnung elastisch verrastbare Zungen aufweisen. Dabei ragt beispielsweise eine Zunge der einen Halbschale in einen zwischen zwei Zungen der anderen Halbschale gebildeten Zwischenraum. Um Kosten zu sparen, sind die Halbschalen vorzugsweise als Gleichteile ausgebildet.

Um eine Mitdrehung des Körpers mit der sphärischen Außenfläche, insbesondere der Kugel des sphärischen Gelenks mit den beiden Halbschalen zu ermöglichen, ragen von der sphärischen Außenfläche bevorzugt stiftförmige Mitnehmer weg, welche in der sphärische Innenfläche ausgebildete Nuten eingreifen. Diese stiftförmigen Mitnehmer sind im auf den Gewindestift aufgeschraubten Zustand des Körpers mit der sphärischen Außenfläche in einer Ebene senkrecht zum Gewindestift und bevorzugt in einer Teilungsebene der Halbschalen angeordnet. Dadurch wird, ähnlich wie bei einem Kardangelenk, einerseits ein Verkippen des Lagerkörpers gegenüber dem Gewindezapfen in allen drei Drehfreiheitsgraden ermöglicht. Zum andern wird aber trotzdem eine Übertragung der Drehbewegung der beiden gekoppelten Halbschalen auf den Körper mit der sphärischen Außenfläche ermöglicht, um diesen gegenüber dem Gewindestift zu verschrauben.

Gemäß einer besonders zu bevorzugenden Ausführungsform weist die Halterungsvorrichtung wenigstens zwei solcher sphärischen Gelenke, insbesondere drei solcher sphärischen Gelenke auf. Dann kann der Trägerkörper gegenüber dem Grundkörper in allen drei Dreh- und Translationsfreiheitsgraden eingestellt werden.

Besonders bevorzugt sind zwischen einer flanschartigen Fläche wenigstens einer der Halbschalen und einem Bohrungsrand der Durchgangsöffnung des Lagerkörpers Rastmittel vorgesehen, zur lösbaren Verrastung von Drehpositionen der Halbschalen gegenüber dem Lagerkörper. Diese Rastmittel können am Umfang der flanschartigen Fläche der betreffenden Halbschale vorgesehene Vorsprünge aufweisen, welche in korrespondierende Ausnehmungen am Bohrungsrand der Durchgangsöffnung ein- und ausrastbar ausgebildet sind. Insbesondere wenn das Steigungsverhältnis des Gewindes bekannt ist, über welches der Körper mit der sphärischen Außenfläche mit dem Gewindezapfen verschraubbar verbunden ist, kann der Verstellweg in Richtung des Gewindezapfens abhängig vom Drehwinkel der Halbschalen bzw. abhängig von den am Umfang verteilten Rastpositionen bestimmt werden. Weiterhin kann dadurch eine einmal eingestellte Drehposition der Halbschalen gegenüber dem Gewindestift und damit die Position des Sensors dauerhaft aufrecht erhalten werden.

Gemäß einer Weiterbildung sind der Lagerkörper und der Grundkörper jeweils plattenförmig ausgebildet.

Gemäß einer besonders zu bevorzugenden Ausführungsform haltert die justierbare Halterungsvorrichtung wenigstens einen Radarsensor, welcher von einem Adaptive Cruise Control (ACC) umfasst ist.

Die Erfindung bezieht sich auch auf ein Fahrzeug umfassend wenigstens eine justierbare Halterungsvorrichtung nach einem der vorhergehenden Ansprüche.

Weitere die Erfindung verbessernde Maßnahmen werden nachstehend gemeinsam mit der Beschreibung eines Ausführungsbeispiels der Erfindung anhand der Zeichnung näher dargestellt.

### Zeichnung

In der Zeichnung zeigt
- Fig.1: eine perspektivische Explosionsdarstellung einer justierbaren Halterungsvorrichtung für Sensoren mit sphärischen Gelenken gemäß einer bevorzugten Ausführungsform der Erfindung mit sphärischen Gelenken;
- Fig.2: eine Schnittdarstellung eines sphärischen Gelenks von Fig.1;
- Fig.3: die untere Halbschale des sphärischen Gelenks von Fig.2 gemäß einer bevorzugten Ausführungsform.

### Beschreibung des Ausführungsbeispiels

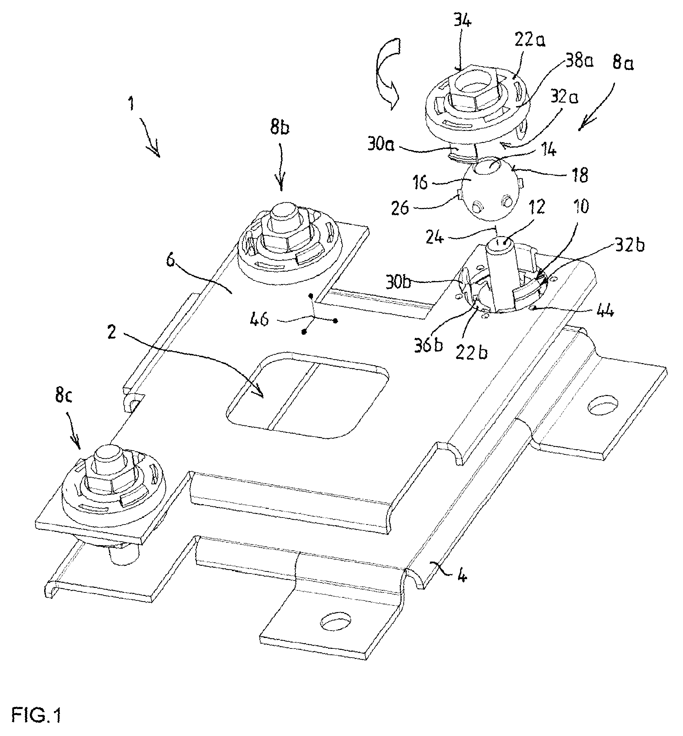

Fig.1 zeigt eine bevorzugte Ausführungsform einer justierbaren Halterungsvorrichtung 1 für Sensoren, welche eine Grundplatte beinhaltet, an und gegenüber welchem eine beispielsweise einen Radarsensor 2 lagernde Lagerplatte 6 mittels vorzugsweise dreier sphärischer Gelenke 8a, 8b, 8c justierbar gehalten ist. Für den Radarsensor 2 ist in Fig.1 lediglich eine Öffnung für dessen Montage gezeigt, wobei er beispielsweise von einer Adaptive Cruise Control (ACC) eines Fahrzeugs umfasst ist, welches den Abstand zu einem voraus fahrenden Fahrzeug geschwindigkeitsabhängig konstant hält. Für eine einwandfreie Funktionsweise ist eine genaue und dauerhaft aufrecht zu erhaltende Positionierung des an der Lagerplatte 6 gehaltenen Radarsensors 2 gegenüber der Grundplatte 4 notwendig, um einen bestimmten Abstrahlwinkel bzw. eine bestimmte Winkellage des Radarsensors 2 in Bezug zur Grundplatte 4 einzustellen. Hierfür dient die im Folgenden genauer beschriebene justierbare Halterungsvorrichtung 1. Die Grundplatte 4 ist beispielsweise an einem Rahmen des Fahrzeugs befestigt.

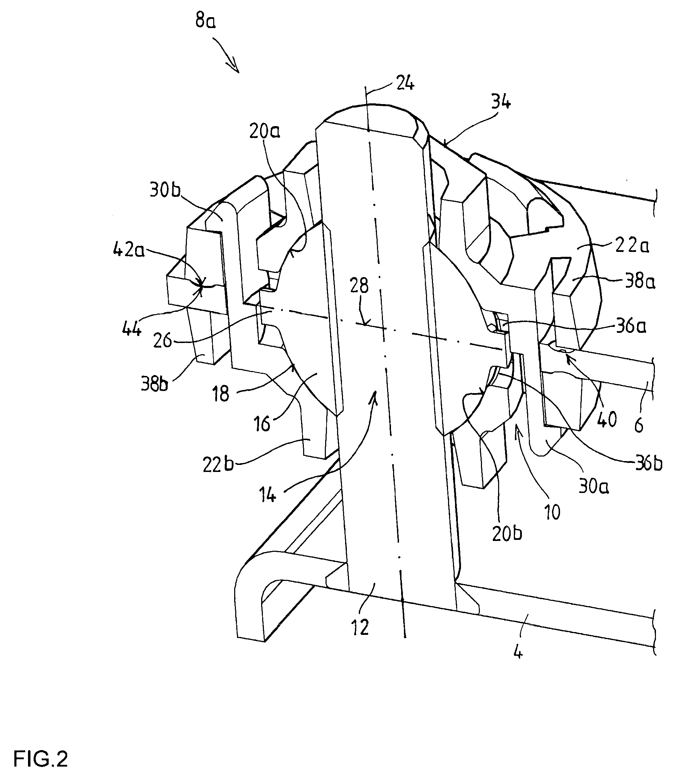

Stellvertretend für die beiden weiteren sphärischen Gelenke 8b, 8c ist das obere rechte sphärische Gelenk 8a in Fig.1 explosionsartig und in Fig.2 im Schnitt dargestellt. Das sphärische Gelenk 8a beinhaltet einen an der Grundplatte 4 befestigten und durch eine Durchgangsöffnung 10 der Lagerplatte 6 ragenden Gewindestift 12, mit welchem eine Öffnung 14 eines Körpers 16 verschraubt ist, der eine sphärische Außenfläche 18 aufweist. Der Körper 16 mit der sphärischen Außenfläche 18 ist hier bevorzugt eine Kugel, wobei deren sphärische Außenfläche 18 in komplementär sphärischen Innenflächen 20a, 20b zweier zusammen gesetzter Halbschalen 22a 22b mit geringem Spiel einerseits schwenkbar und andererseits zusammen mit den Halbschalen 22a, 22b um eine mit dem Gewindestift 12 koaxiale Drehachse 24 mitdrehbar gehalten ist. Um diese Drehachse 24 sind die wenigstens drehgekoppelten Halbschalen 22a, 22b in der Durchgangsöffnung 10 der Lagerplatte 6 drehbar aufgenommen. Die Durchgangsöffnung 10 der Lagerplatte 6 hat gegenüber dem Außendurchmesser des Gewindestifts 12 einen größeren Durchmesser, damit die Kugel 16 mit ihrem äquatorialen Durchmesser bzw. mit noch zu erläuternden Mitnehmerstiften 26 in der Ebene der Durchgangsöffnung 10 der Lagerplatte 6 angeordnet werden kann.

Bevorzugt ist eine Teilungsebene 28 der beiden Halbschalen 22a, 22b in der Ebene der Durchgangsöffnung 10 der Lagerplatte 6 angeordnet, wie insbesondere Fig.2 zeigt. Dies kann beispielsweise dadurch realisiert sein, dass die Halbschalen 22a, 22b am Umfang mit Umfangsabstand verteilt angeordnete und in der Durchgangsöffnung 10 elastisch verrastbare Rastzungen 30a, 30b aufweisen. Dabei ragt beispielsweise eine Rastzunge 30a der einen Halbschale 22a in einen zwischen zwei Rastzungen 30b der anderen Halbschale 22b gebildeten Zwischenraum 32b. Dazu sind die Halbschalen 22a, 22b vorzugsweise als Gleichteile ausgebildet. Mit anderen Worten sind die beiden Halbschalen 22a, 22b über die Rastzungen 30a, 30b einerseits miteinander drehgekoppelt und andererseits in der Durchgangsöffnung 10 der Lagerplatte 6 gehalten, da die Enden der Rastzungen 30a, 30b jeweils einen Bohrungsrand der Durchgangsöffnung 10 übergreifen, wie anhand von Fig.2 leicht vorstellbar ist. Weiterhin weisen die Halbschalen 22a, 22b jeweils eine Ansatzfläche 34 für ein Werkzeug auf, beispielsweise für einen Schraubenschlüssel, um sie gegenüber dem Gewindestift 12 als Einheit verdrehen zu können.

Um eine Mitdrehung der Kugel 16 des sphärischen Gelenks 8a mit den beiden Halbschalen 22a, 22b zu ermöglichen, ragen von der sphärischen Außenfläche 18 der Kugel 16 bevorzugt Mitnehmerstifte 26 weg, welche in die sphärischen Innenflächen 20 der beiden Halbschalen 22a, 22b ausgebildete Nuten 36a, 36b eingreifen. Diese Nuten 36a, 36b sind am besten anhand von Fig.2 sichtbar und erstrecken sich beispielsweise nach Art von Längengraden jeweils ein Stück über die Teilungsebene 28 der beiden Halbschalen 22a, 22b hinaus. Die Mitnehmerstifte 26 sind im auf den Gewindestift 12 aufgeschraubten Zustand der Kugel 16 in einer Ebene senkrecht zum Gewindestift 12 und in der Teilungsebene 28 der Halbschalen 22a, 22b angeordnet, welche koplanar mit der Äquatorialebene der Kugel 16 ist.. Dadurch wird eine Übertragung einer auf die beiden gekoppelten Halbschalen 22a, 22b durch Fremdkraft aufgebrachten Drehbewegung auf die Kugel 16 ermöglicht, um diese gegenüber dem Gewindestift 12 zu verschrauben. Andererseits ist wie bei einem Kardangelenk ein Verkippen der gekoppelten Halbschalen 22a, 22b und damit der Lagerplatte 6 gegenüber dem Gewindezapfen 12 in allen drei Drehfreiheitsgraden möglich.

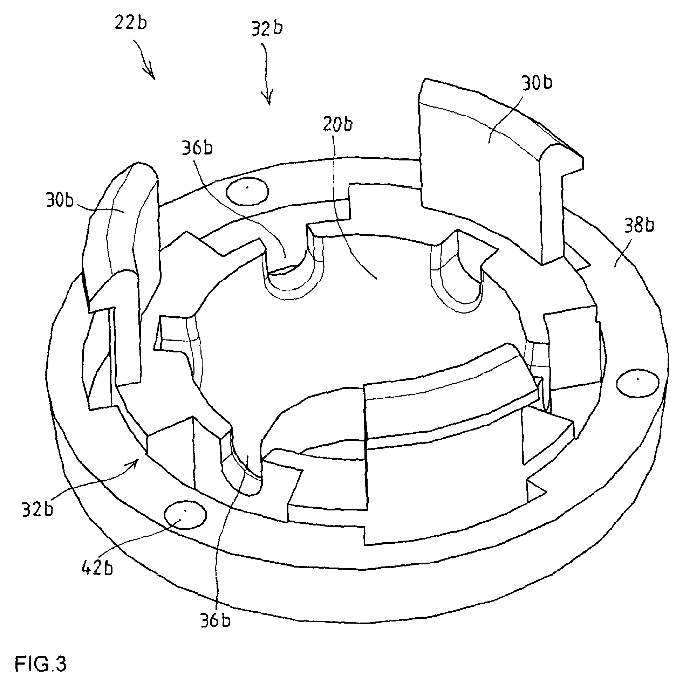

Besonders bevorzugt sind zwischen Flanschflächen 38a, 38b der Halbschalen 22a, 22b und den nach außen weisenden Bohrungsrändern der Durchgangsöffnung 10 der Lagerplatte 6 Rastmittel 40 vorgesehen, zur lösbaren Verrastung von Drehpositionen der Halbschalen 22a, 22b gegenüber der Lagerplatte 6. Diese Rastmittel 40 weisen am Umfang der Flanschflächen 38a, 38b der Halbschalen 22a, 22b vorgesehene Vorsprünge 42a, 42b auf, welche am besten in Fig.3 sichtbar sind, die die in Fig.1 untere Halbschale 22b zeigt. Die Vorsprünge 42a, 42b sind in korrespondierende Ausnehmungen 44 an den Bohrungsrändern der Durchgangsöffnung 10 ein- und ausrastbar ausgebildet. Bevorzugt sind zumindest die Kugeln 16 und die Halbschalen 22a, 22b der sphärischen Gelenke 8a, 8b und 8c aus einem geeigneten Kunststoff gefertigt und bevorzugt spritzgegossen.

Die Montage eines solchen sphärischen Gelenks 8a geht dann wie folgt vonstatten: Zunächst wird eine Halbschale 22b in Fig.1 von unten her in die Durchgangsöffnung 10 der Lagerplatte 6 eingesetzt, bis ihre elastischen Rastzungen 30b den in Fig.1 oberen Bohrungsrand der Durchgangsöffnung 10 übergreifen. Dann wird die Lagerplatte 6 von oben her derart auf die Grundplatte 4 aufgesetzt, dass der zugeordnete Gewindestift 12 etwa mittig durch die Durchgangsöffnung 10 der Lagerplatte 6 hindurch und nach oben aus der Durchgangsöffnung 10 heraus ragen kann.

Im nächsten Schritt wird dann die Kugel 16 auf den Gewindestift 12 aufgeschraubt und die bereits in der Durchgangsöffnung gehalterte Halbschale 22b so verdreht, dass die Mitnehmerstifte 26 an der sphärischen Außenfläche 18 der Kugel 16 in die zugeordneten Nuten 36b an der sphärischen Halbkugel-Innenfläche 20b eingreifen können. Sodann wird die andere Halbschale 22a mit ihren Rastzungen 30a in die Durchgangsöffnung 10 eingesetzt, derart, dass einerseits wiederum die Mitnehmerstifte 26 der Kugel 16 in die zugeordneten Nuten 36a an der sphärischen Halbkugel-Innenfläche 20a der Halbschale 22a eingreifen können und andererseits die Rastzungen 30a den in Fig.1 unteren Bohrungsrand der Durchgangsöffnung 10 übergreifen und zugleich in die Zwischenräume 32b zwischen den Rastzungen 30b der anderen Halbschale 22b eingreifen können, um die Drehkopplung der beiden Halbschalen 22a, 22b zu realisieren. Andererseits greifen dann auch die Rastzungen 30b der einen Halbschale 22b in die Zwischenräume 32a zwischen den Rastzungen 30a der anderen Halbschale 22a ein. Die Nuten 36a, 36b an den sphärischen Innenflächen 20a, 20b der Halbschalen 22a, 22b sind dabei derart angeordnet, dass sie sich im montierten Zustand der Halbschalen 22a, 22b in Flucht zueinander befinden bzw. lückenlos und stetig ineinander übergehen.

Vor diesem Hintergrund ist die Funktionsweise der erfindungsgemäßen justierbaren Halterungsvorrichtung 1 wie folgt: Wenn die über die - Rastzungen 30a, 30b miteinander drehgekoppelten Halbschalen 22a, 22b gegenüber der Durchgangsöffnung 10 durch Ansatz eines Schraubwerkzeugs an der Ansatzfläche 34 der in Fig.1 oberen Halbschale 22a verdreht werden, wie in Fig.1 durch den Pfeil angedeutet ist, wird die Kugel 16 über die ineinander greifenden Mitnehmerstifte/Nuten 26, 36a, 36b auf dem Gewindestift 12 mitverdreht, wodurch sich die Position der Lagerplatte 6 im Bereich des Gewindestifts 12 relativ zum Gewindestift 12 und damit zur Grundplatte 4 ändert, in Fig.1 also die vertikale Position.

Es ist anhand von Fig.1 dann leicht vorstellbar, dass die Lagerplatte 6 relativ zur Grundplatte 4 durch Verstellen der weiteren beiden sphärischen Gelenke 8b, 8c bezüglich der drei räumlichen Drehfreiheitsgrade um einen Drehmittelpunkt 46 verkippt werden kann, um einen bestimmten Abstrahlwinkel bzw. eine bestimmte Winkellage des Radarsensors 2 relativ zur Grundplatte 4 herzustellen. In jedem der drei sphärischen Gelenke 8a, 8b und 8c können sich dann die gekoppelten Halbschalen 22a, 22b gegenüber der jeweiligen Kugel 16 ungehindert verdrehen.

### Bezugszeichenliste

- 1: Halterungsvorrichtung
- 2: Sensor
- 4: Grundplatte
- 6: Lagerplatte
- 8a/b/c: sphärische Gelenke
- 10: Durchgangsöffnung
- 12: Gewindestift
- 14: Öffnung
- 16: Kugel
- 18: sphärische Außenflächen
- 20a/b: sphärische Innenflächen
- 22a/b: Halbschalen
- 24: Drehachse
- 26: Mitnehmerstifte
- 28: Teilungsebene
- 30a/b: Rastzungen
- 32a/b: Zwischenräume
- 34: Ansatzfläche
- 36a/b: Nuten
- 38a/b: Flanschflächen
- 40: Rastmittel
- 42a/b: Vorsprünge
- 44: Ausnehmungen
- 46: Drehmittelpunkt

## Patentansprüche

1. Justierbare Halterungsvorrichtung (1) für Sensoren, beinhaltend einen Grundkörper (4), an und gegenüber welchem ein den wenigstens einen Sensor (2) lagernder Lagerkörper (6) mittels wenigstens eines sphärischen Gelenks (8a, 8b, 8c) justierbar gehalten ist, **dadurch gekennzeichnet, dass** das sphärische Gelenk (8a, 8b, 8c) einen am Grundkörper (4) befestigten und durch eine Durchgangsöffnung (10) des Lagerkörpers (6) ragenden Gewindestift (12) beinhaltet, mit welchem eine Öffnung (14) eines Körpers (16) mit einer sphärischen Außenfläche (18) verschraubt ist, welche in komplementär sphärischen Innenflächen (20a, 20b) zweier zusammen gesetzter Halbschalen (22a, 22b) einerseits schwenkbar und andererseits zusammen mit den Halbschalen (22a, 22b) um eine mit dem Gewindestift (12) koaxiale Drehachse (24) mitdrehbar gehalten ist, um welche die Halbschalen (22a, 22b) in der Durchgangsöffnung (10) des Lagerkörpers (6) drehbar aufgenommen sind, derart, dass durch eine fremdkraftbedingte Drehung der wenigstens drehgekoppelten Halbschalen (22a, 22b) gegenüber der Durchgangsöffnung (10) der Körper (16) mit der sphärischen Außenfläche (18) relativ zum Gewindestift (12) unter Verlagerung der Halbschalen (22a, 22b) und des Lagerkörpers (6) in Richtung des Gewindestifts (12) verschraubbar ist.

2. Justierbare Halterungsvorrichtung nach Anspruch 1, **dadurch gekennzeichnet, dass** sie wenigstens zwei solcher sphärischer Gelenke (8a, 8b, 8c) aufweist.

3. Justierbare Halterungsvorrichtung nach Anspruch 1 oder 2, **dadurch gekennzeichnet, dass** zwischen einer flanschartigen Fläche (38a, 38b) wenigstens einer der Halbschalen (22a, 22b) und einem Bohrungsrand der Durchgangsöffnung (10) des Lagerkörpers (6) Rastmittel (40) vorgesehen sind, zur Verrastung von Drehpositionen der Halbschalen (22a, 22b) gegenüber dem Lagerkörper (6).

4. Justierbare Halterungsvorrichtung nach Anspruch 3, **dadurch gekennzeichnet, dass** die Rastmittel (40) am Umfang der flanschartigen Fläche (38a, 38b) der Halbschale (22a, 22b) vorgesehene Vorsprünge (42a, 42b) aufweisen, welche in korrespondierende Ausnehmungen (44) am Bohrungsrand der Durchgangsöffnung (10) ein- und ausrastbar ausgebildet sind.

5. Justierbare Halterungsvorrichtung nach einem der vorhergehenden Ansprüche, **dadurch gekennzeichnet, dass** der Lagerkörper (6) und der Grundkörper (4) jeweils plattenförmig ausgebildet sind.

6. Justierbare Halterungsvorrichtung nach einem der vorhergehenden Ansprüche, **dadurch gekennzeichnet, dass** der Körper (16) mit der sphärischen Außenfläche (18) eine Kugel, eine Teilkugel oder eine Kugelschicht umfasst.

7. Justierbare Halterungsvorrichtung nach einem der vorhergehenden Ansprüche, **dadurch gekennzeichnet, dass** eine Teilungsebene (28) der beiden Halbschalen (22a, 22b) in der Durchgangsöffnung (10) angeordnet ist.

8. Justierbare Halterungsvorrichtung nach Anspruch 7, **dadurch gekennzeichnet, dass** die Halbschalen (22a, 22b) am Umfang verteilt angeordnete und am Rand der Durchgangsöffnung (10) elastisch verrastbare Zungen (30a, 30b) aufweisen.

9. Justierbare Halterungsvorrichtung nach Anspruch 7 oder 8, **dadurch gekennzeichnet, dass** von der sphärischen Außenfläche (18) des Körpers (16) Mitnehmer (26) wegragen, welche in den sphärischen Innenflächen (20a, 20b) der Halbschalen (22a, 22b) ausgebildete Nuten (36a, 36b) eingreifen.

10. Justierbare Halterungsvorrichtung nach Anspruch 9, **dadurch gekennzeichnet, dass** die Mitnehmer (26) im auf den Gewindestift (12) aufgeschraubten Zustand des Körpers (16) mit der sphärischen Außenfläche (18) in einer Ebene senkrecht zum Gewindestift (12) und in der Teilungsebene (28) der Halbschalen (22a, 22b) angeordnet sind.

11. Justierbare Halterungsvorrichtung nach einem der vorhergehenden Ansprüche, **dadurch gekennzeichnet, dass** die Halbschalen (22a, 22b) als Gleichteile ausgebildet sind.

12. Justierbare Halterungsvorrichtung nach einem der vorhergehenden Ansprüche, **dadurch gekennzeichnet, dass** sie einen Radarsensor (2) haltert, welcher von einem Adaptive Cruise Control (ACC) umfasst ist.

13. Fahrzeug, umfassend wenigstens eine justierbare Halterungsvorrichtung (1) nach einem der vorhergehenden Ansprüche.

## Claims

1. Adjustable holding device (1) for sensors, comprising a base body (4), on and opposite to which a bearing body (6) supporting at least one sensor (2) is adjustably held by means of at least one spherical joint (8a, 8b, 8c), **characterised in that** said spherical joint (8a, 8b, 8c) includes a threaded pin (12) fastened on said base body (4) and projecting through a passage (10) of said bearing body (6), with which pin an opening (14) of a body (16) with a spherical outside surface (18) is screw-connected, which is held in complementary spherical inside surfaces (20a, 20b) of two assembled half-shells (22a, 22b) for pivoting movement, on the one hand, and, on the other hand, for being caused to rotate together with said half-shells (22a, 22b) about an axis of rotation (24) coaxial relative to said threaded pin (12), about which said half-shells (22a, 22b) are received in said passage (10) of said bearing body (6) for rotation in such a way that said body (16) can be screw-connected to said spherical outside surface (18) relative to said threaded pin (12) by rotation of said half-shells (22a, 22b), which are at least coupled for rotation, relative to said passage, which rotation is induced by an external force, with displacement of said half-shells (22a, 22b) and said bearing body (6) in a direction towards said threaded pin (12).

2. Adjustable holding device according to Claim 1, **characterised in that** it comprises at least two of such spherical joints (8a, 8b, 8c).

3. Adjustable holding device according to Claim 1 or 2, **characterised in that** latching means (40) are provided between a flange-like surface (38a, 38b) of at least one of said half-shells (22a, 22b) and a borehole edge of said passage (10) of said bearing body (6) for latching rotational positions of said half-shells (22a, 22b) relative to said bearing body (6).

4. Adjustable holding device according to Claim 3, **characterised in that** said latching means (40) present projections (42a, 42b) along the periphery of said flange-like surface (38a, 38b) of said half-shell (22a, 22b), which are configured for being latched into and out of corresponding recesses (44) on the borehole edge of said passage (10).

5. Adjustable holding device according to any of the preceding Claims, **characterised in that** said bearing body (6) and said base body (4) are each configured in the form of a flat plate.

6. Adjustable holding device according to any of the preceding Claims, **characterised in that** said body (16) with said spherical outside surface (18) includes a sphere, a partial sphere or a spherical segment.

7. Adjustable holding device according to any of the preceding Claims, **characterised in that** a divisional plane (28) of said two half-shells (22a, 22b) is disposed in said passage (10).

8. Adjustable holding device according to Claim 7, **characterised in that** said half-shells (22a, 22b) are provided with resiliently latchable tongues (30a, 30b) distributed along the periphery and disposed on the edge of said passage (10).

9. Adjustable holding device according to Claims 7 or 8, **characterised in that** carriers (26) project away from said spherical outside surface (18) of said body (16), which engage in grooves (36a, 36b) formed in said spherical inside surfaces (20a, 20b) of said half-shells.

10. Adjustable holding device according to Claim 9, **characterised in that** in the condition in which said body (16) is screwed onto said threaded pin (12), said carriers (26) are disposed with said spherical outside surface (18) in a plane orthogonal on said threaded pin (12) and in said divisional plane (28) of said half-shells (22a, 22b).

11. Adjustable holding device according to any of the preceding Claims, **characterised in that** said half-shells (22a, 22b) are configured as equal parts.

12. Adjustable holding device according to any of the preceding Claims, **characterised in that** it holds a radar sensor (2) that is encompassed by an Adaptive Cruise Control (ACC) unit.

13. Vehicle including at least one adjustable holding device (1) according to any of the preceding Claims.

## Revendications

1. Dispositif support ajustable (1) pour capteurs, comprenant un corps de base (4), sur lequel et en opposition auquel un corps de logement (6) est tenu de façon ajustable, qui supporte au moins un capteur (2), moyennant au moins une articulation sphérique (8a, 8b, 8c), **caractérisé en ce que** ladite articulation sphérique (8a, 8b, 8c) renferme une tige filetée (12) fixée audit corps de base (4) et faisant saillie à travers un ouverture traversante (10) dudit corps de logement (6), à laquelle est vissée une ouverture (14) d'un corps (16) avec une surface extérieure sphérique (18), qui est tenue dans des surfaces intérieures sphériques (20a, 20b) complémentaires de deux semi-coques (22a, 22b) assemblées pour un mouvement pivotant, d'un côté, et, d'autre côté, afin d'être induit à tourner ensemble avec lesdites semi-coques (22a, 22b) autour d'un axe de révolution (24) coaxial relatif à ladite tige filetée (12), autour duquel sont reçu lesdites semi-coques (22a, 22b) dans ladite ouverture traversante (10) dudit corps de logement (6) pour une révolution de telle manière, que ledit corps (16) peut être vissé à ladite surface extérieure sphérique (18) relativement à ladite tige filetée (12) grâce à la révolution desdites semi-coques (22a, 22b), qui sont accouplé au moins pour une rotation, relative à ladite ouverture traversante, à cette révolution étant induite par un effort extérieur, à déplacement desdites semi-coques (22a, 22b) et dudit corps de logement (6) en une direction vers ladite tige filetée (12).

2. Dispositif support ajustable selon la revendication 1, **caractérisé en ce qu'**il comprend au moins deux desdites telles articulations sphériques (8a, 8b, 8c).

3. Dispositif support ajustable selon la revendication 1 ou 2, **caractérisé en ce que** des moyens de verrouillage (40) sont disposés entre une surface en forme de bride (38a, 38b) d'au moins une desdites semi-coques (22a, 22b) et un bord de forage de ladite ouverture traversante (10) dudit corps de logement (6) afin de verrouiller des positions rotatives desdites semi-coques (22a, 22b) relatives audit corps de logement (6).

4. Dispositif support ajustable selon la revendication 3, **caractérisé en ce que** lesdits moyens de verrouillage (40) présentent des saillies (42a, 42b) le long de la périphérie de ladite surface en forme de bride (38a, 38b) de ladite semi-coque (22a, 22b), qui sont configurées pour le verrouillage dans et en dehors des évidements correspondants (44) au bord du forage de ladite ouverture traversante (10).

5. Dispositif support ajustable selon une quelconque des revendications précédentes, **caractérisé en ce que** ledit corps de logement (6) et ledit corps de base (4) sont configurés chacun sous forme d'une plaque plate.

6. Dispositif support ajustable selon une quelconque des revendications précédentes, **caractérisé en ce que** ledit body (16) avec ladite surface extérieure sphérique (18) comprend une sphère, une sphère partielle ou un segment sphérique.

7. Dispositif support ajustable selon une quelconque des revendications précédentes, **caractérisé en ce qu'**un plan de séparation (28) desdites deux semi-coques (22a, 22b) est disposée dans ladite ouverture traversante (10).

8. Dispositif support ajustable selon la revendication 7, **caractérisé en ce que** lesdites semi-coques (22a, 22b) sont munies des langues élastiquement verrouillables (30a, 30b) distribuées le long de la périphérie et disposées au bord de ladite ouverture traversante (10).

9. Dispositif support ajustable selon la revendications 7 ou 8, **caractérisé en ce que** des entraîneurs (26) font saillie à partir de ladite surface extérieure sphérique (18) dudit corps (16), qui se mettent en prise dans des rainures (36a, 36b) formées dans lesdites surfaces intérieures sphériques (20a, 20b) desdites semi-coques.

10. Dispositif support ajustable selon la revendication 9, **caractérisé en ce qu'**en un état où ledit corps (16) est vissé à ladite tige filetée (12), lesdits entraîneurs (26) sont disposés par ladite surface extérieure sphérique (18) dans un plan orthogonal sur ladite tige filetée (12) et dans ledit plan de séparation (28) desdites semi-coques (22a, 22b).

11. Dispositif support ajustable selon une quelconque des revendications précédentes, **caractérisé en ce que** lesdites semi-coques (22a, 22b) sont configurées en tant que parties égales.

12. Dispositif support ajustable selon une quelconque des revendications précédentes, **caractérisé en ce qu'**il tient un capteur radar (2), qui est renfermé par une unité dite by an Adaptive Cruise Control (ACC).

13. Véhicule comprenant au moins un dispositif support ajustable (1) selon une quelconque des revendications précédentes.
